# EUROPÄISCHE PATENTANMELDUNG

(11) **EP 4 173 870 A1**
(43) Veröffentlichungstag der Anmeldung: **03.05.2023**
(21) Anmeldenummer: 22204481.0
(22) Anmeldetag: 28.10.2022
(51) Int. Cl.: B60K 35/00, B60K 37/06, G06F 3/045

(54) **BEDIENKONSOLE**

(30) Priorität: 02.11.2021 DE 102021128470
(71) Anmelder: Graf-Syteco GmbH & Co. KG, 78609 Tuningen (DE)
(72) Erfinder: HAFNER, Steffen, 78549 Spaichingen (DE)
(74) Vertreter: Klunker IP Patentanwälte PartG mbB

(57) **Zusammenfassung**

Eine Bedienkonsole (1) zum Bedienen eines Geräts umfasst ein als resistives Touchdisplay ausgebildetes Display (3) mit einer Berührungsoberfläche (11a), eine die Berührungsoberfläche bedeckende Folie (12).Die Folie weist mindestens eine Funktionstaste (4) auf, die einerseits einen transparenten oder zumindest transluzenten Durchsichtbereich (4a) in einer demgegenüber opakeren Umgebung (8) umfasst, durch den hindurch das Display visuell wahrnehmbar ist, und die andererseits einen sich in einer Richtung weg von der Berührungsoberfläche erstreckenden Wölbungsbereich (4b) umfasst, welcher taktil wahrnehmbar und vom Nutzer gegen die Berührungsoberfläche drückbar ist. Eine Steuerung (C) ist dazu eingerichtet, dem Nutzer zu einer oder mehreren der mindestens einen Funktionstaste mittels des Displays durch den jeweiligen Durchsichtbereich hindurch eine Funktion der betreffenden Funktionstaste anzuzeigen. Die Funktion variiert je nach der Betriebsart, in der ein mittels der Bedienkonsole zu bedienendes Gerät betrieben wird oder betrieben werden soll, oder je nach Menüart, mit der die Bedienkonsole betrieben wird.

## Beschreibung

Die vorliegende Erfindung betrifft eine Bedienkonsole mit Touchscreen zum Bedienen eines Geräts, insbesondere zum Bedienen eines mit einem Fahrzeug verbundenen Geräts.

Zum Bedienen von Geräten, insbesondere an Fahrzeugen, beispielsweise Baufahrzeugen oder Wasserwerferfahrzeugen, kommen üblicherweise Bedienvorrichtungen zum Einsatz, mittels derer Gerätefunktionen des jeweiligen Geräts gesteuert werden können. Derartige Bedienvorrichtungen, welche auch als Bedienkonsolen bekannt sind, weisen mehrere Schaltflächen auf, durch deren Betätigung eine Bedienperson die den Schaltflächen zugeordnete Gerätefunktionen steuern kann.

Für die Bedienung komplexer Maschinen besteht die Möglichkeit, die Schaltflächen in Gestalt zahlreicher Tasten mit eigener Bedruckung und dadurch definierter Funktion auszubilden. Der Nachteil von solchen Tasten mit definierter Funktion besteht darin, dass sehr viele Tasten benötigt werden, um alle notwendigen Funktionen abzudecken, insbesondere wenn mittels der Bedienkonsole unterschiedlichste Betriebsarten abgedeckt werden sollen, welche voneinander verschiedene Bedienungfunktionen erfordern. Wenn eine Betriebsart nur selten zum Einsatz kommt, sind die betreffenden, nur für diese Bedienart relevanten Tasten weitgehend unnütz. Derartige Betriebsarten können beispielsweise ein Einrichtbetrieb, eine Transportfahrt und/oder einen Arbeitsmodus des Geräts oder des betreffenden Fahrzeugs betreffen.

Um die Anzahl der Tasten und damit die Größe des Bedienfelds der Bedienkonsole zu reduzieren, ist es bekannt, Touchdisplays einzusetzen, auf welchen durch variable Icons wechselnde Funktionen definiert werden können. Der Nachteil solcher Touchdisplays besteht allerdings darin, dass sie für robuste Arbeitsumgebungen nicht geeignet sind. Eine Verschmutzung bei kapazitiven Displays kann zu ungewollten Effekten führen. Auch resistive Touchdisplays sind nicht immer einfach zu benutzen, insbesondere nicht mit Arbeitshandschuhen. Auch bei Arbeiten im Dunkeln sind Touchdisplays trotz der Möglichkeit eines beleuchteten Nachtdesigns nicht ideal. Aufgabe der vorliegenden Erfindung ist es daher, eine Bedienkonsole zu schaffen, die die vorgenannten Nachteile bekannter Bedienkonsolen vermeidet.

Die Aufgabe wird erfindungsgemäß durch eine Bedienkonsole mit den Merkmalen des anhängenden unabhängigen Anspruchs 1 gelöst. Weiterbildungen und vorteilhafte Ausgestaltungen sind in davon abhängigen Ansprüchen angegeben.

Gemäß einem Aspekt der vorliegenden Offenbarung wird eine Bedienkonsole vorgeschlagen, welches ein Display besitzt, das als resistives Touchdisplay ausgebildet ist und demensprechend eine Berührungsoberfläche aufweist. Über der Berührungsoberfläche ist eine Folie angeordnet, welche die Berührungsoberfläche bedeckt, vorzugsweise vollständig bedeckt, und die mindestens eine Funktionstaste aufweist, vorzugsweise eine Mehrzahl von Funktionstasten. Die Funktionstasten besitzen einerseits einen transparenten oder zumindest transluzenten Durchsichtbereich in einer demgegenüber opakeren Umgebung, durch den hindurch das Display visuell wahrnehmbar ist. Die Transparenz sollte möglichst hoch sein, wobei, weil eine 100 prozentige Transparenz nahezu ausgeschlossen ist, eine Transluzenz von 90% oder mehr im Sinne der vorliegenden Erfindung als transparent angesehen wird. Außerdem weist die Funktionstaste einen Wölbungsbereich auf, der sich in einer Richtung weg von der Berührungsoberfläche erstreckt. Dieser Wölbungsbereich ist taktil wahrnehmbar und erstreckt sich vorzugsweise wenigstens einen Millimeter über eine äußere Oberfläche der Folie. Der Wölbungsbereich dient dazu, dass der Nutzer die Funktionstaste nicht nur blind auffinden und taktil erfassen kann, sondern darüber hinaus gegen die Berührungsoberfläche des resistiven Touchdisplays drücken und so die Funktionstaste betätigen kann. Schließlich ist noch eine Steuerung vorgesehen, die dazu eingerichtet ist, dem Nutzer zu einer oder mehreren der Funktionstasten mittels des Displays durch den jeweiligen Durchsichtbereich hindurch eine Funktion der betreffenden Funktionstaste anzuzeigen, die abhängig von einer individuellen Vorgabe variiert.

Eine derart ausgestaltete Bedienkonsole ist besonders zum Bedienen eines Geräts geeignet, welches in unterschiedlichen Betriebsarten betrieben werden kann. In diesem Falle ist die individuelle Vorgabe, von der die in dem Durchsichtbereich der betreffenden Funktionstaste angezeigte Funktion abhängt, die konkrete Betriebsart, in der das mittels der Bedienkonsole zu bedienende Gerät betrieben wird oder betrieben werden soll. Vorzugsweise ist die Bedienkonsole so ausgestaltet, dass der Nutzer selbst mittels der Bedienkonsole zwischen einer Mehrzahl von Betriebsarten wählen kann.

Eine derart ausgestaltete Bedienkonsole ist aber in gleicher Weise vorteilhaft einsetzbar, wenn die Bedienkonsole nicht (oder nicht nur) zum Bedienen eines Geräts in unterschiedlichen Betriebsarten dient, sondern (auch) mit unterschiedlichen Menüarten betrieben wird. In diesem Falle ist die individuelle Vorgabe, von der die in dem Durchsichtbereich der betreffenden Funktionstaste angezeigte Funktion abhängt, die konkrete Menüart, mit dem die Bedienkonsole betrieben wird. Solche Menüarten können beispielsweise ein Einstellungsmenü, Servicemenü, Betriebsmenü und/oder anderes Menü sein.

Die Bedienkonsole kombiniert Kompaktheit und leichte Bedienbarkeit bei geringen Herstellungskosten. Die Kompaktheit wird dadurch erreicht, dass Funktionstasten je nach gewählter Betriebsart mit einer anderen Funktion belegt sind, sodass es sich im Grunde um Multifunktionstasten handelt. Die Anzahl der Funktionstasten kann auf diese Weise gering gehalten werden. Die einfache Bedienbarkeit der Bedienkonsole rührt einerseits daher, dass die Wölbungsbereiche der Funktionstasten taktil wahrnehmbar sind, sodass sie auch bei schlechten Lichtverhältnissen oder gegebenenfalls ohne hinzuschauen auffindbar sind. Andererseits erleichtert die im Vergleich zum Durchsichtbereich opakere Umgebung das Auffinden des Durchsichtbereichs und damit das Auffinden der betreffenden Funktionstaste. Besonders vorteilhaft ist es in diesem Zusammenhang, wenn der taktil wahrnehmbare Wölbungsbereich, welcher vom Nutzer gegen die Berührungsoberfläche des Touchdisplays gedrückt wird, in dem Durchsichtbereich der Funktionstaste ausgebildet ist, sodass gerade die vom Nutzer zu betätigende Fläche leicht auffindbar ist.

Die Bedienkonsole ist preiswert herstellbar, weil ein übliches resistives Touchdisplay verwendet werden kann, über dessen Berührungsoberfläche die die Funktionstasten aufweisende Folie angebracht wird. Beispielsweise kann die Folie in einfacher Weise auf das Touchdisplay aufgeklebt sein. Darüber hinaus ist die Bedienkonsole in mehrfacher Hinsicht robust, weil einerseits ein herkömmliches, robustes resistives Touchdisplay Anwendung finden kann, und andererseits weil die Folie dieses Touchdisplay zusätzlich vor Verschmutzung und anderen Umwelteinflüssen schützt. Im Gegensatz zu einem kapazitiven Touchdisplay, welches schon bei Annäherung auslöst, bietet das resistive Touchdisplay den Vorteil, dass es nur auslöst, wenn die Berührungsoberfläche aktiv (geringfügig) eingedrückt wird.

In diesem Zusammenhang ist es von Vorteil, wenn unter dem Wölbungsbereich ein Hohlraum vorhanden ist. Zwar kann der Wölbungsbereich auch durch einen sich nach außen verdickenden Teilbereich der Folie gebildet werden. Jedoch bietet ein Hohlraum im Wölbungsbereich den Vorteil, dass der Nutzer ein besseres Feedback-Gefühl erhält, weil er die Taste tiefer und mit einem notwendigen Mindestdruck drücken muss und dadurch ein intensiveres Druckerlebnis erfährt.

Die Wölbung mit darunterliegendem Hohlraum lässt sich in einfacher und preiswerter Weise im Wege des Prägens erreichen, insbesondere durch Heißprägung. Die Folie selbst kann eine Dicke zwischen 100 µm und 400 µm besitzen, vorzugsweise etwa 200 µm. Dies gilt insbesondere für den Wölbungsbereich, wenn unter dem Wölbungsbereich ein Hohlraum vorhanden ist, wobei die konkrete Dicke abhängig von dem Material der Folie so gewählt wird, dass das Niederdrücken des Wölbungsbereichs nicht zu viel Kraft erfordert, aber auch nicht unbeabsichtigt erfolgt. Die Folie ist vorzugsweise eine Kunststofffolie, wobei sich Polyester als besonders geeignet für das Folienmaterial erwiesen hat. Die Folie kann alternativ auch eine Silikonfolie sein und auf diese Weise eine griffige Silikontatstur bilden. Insbesondere kann die Silikonfolie relativ dick ausgebildet sein und eine mattenartige Form besitzen. Die Silikonfolie oder Silikonmatte kann alternativ auch zusätzlich über der eigentlichen Kunststofffolie vorgesehen sein.

Zusätzlich zu den Multifunktionstasten kann die Bedienkonsole vorteilhaft ein oder mehrere weitere Funktionstasten aufweisen, die entsprechend der Multifunktionstasten aufgebaut, jedoch betriebsartunabhängig sind. Das heißt, bei diesen Funktionstasten wird die jeweilige, betriebsartunabhängige Funktion mittels des Displays durch den Durchsichtbereich der Funktionstaste hindurch unabhängig von der gewählten Betriebsart immer gleich angezeigt. Tasten mit fixer Funktion können ebenso mit einem festen Symbol in der Folie gedruckt werden.

Vorzugsweise ist die gegenüber dem Durchsichtbereich opakere Umgebung vollständig opak, also undurchsichtig. Dies kann in einfacher und dementsprechend preiswerter Weise durch eine opake, vorzugsweise schwarze oder graue Beschichtung auf der Oberseite der Folie oder, besonders bevorzugt, auf der Unterseite der Folie realisiert sein. Das Beschichten der Unterseite der Folie hat den Vorteil, dass der opake Aufdruck durch den normalen Betrieb nicht abnutzen kann. Das Beschichten der Oberseite der Folie hat den Vorteil, dass, insbesondere bei Verwendung einer matten Beschichtung, die unbedruckten Durchsichtbereiche besonders leicht identifizierbar sind. Alternativ kann die Oberseite der Folie außerhalb der Durchsichtbereiche mattiert sein.

In der opaken Umgebung der Funktionstaste kann zusätzlich ein transparentes oder zumindest transluzentes Statusfenster vorgesehen sein, beispielsweise in Gestalt eines kleinen kreisförmigen oder polygonen Durchsichtbereichs, wobei die Steuerung diesbezüglich dazu eingerichtet ist, mittels des Displays in dem Statusfenster einen Farbcode anzuzeigen, der je nach Status variiert. Der Durchsichtbereich ist vorzugsweise so erzeugt, dass die opake Beschichtung auf der Folie im Bereich des Statusfensters fehlt, oder indem das Statusfenster aus der Folie ausgeschnitten ist. Der mittels des Displays in dem Statusfenster angezeigte Farbcode kann vorzugsweise mit 8 Bit pro Farbkanal erzeugt werden, d.h. mit bis zu 16,8 Miollionen Farben variieren. Insbesondere kann der Farbcode zwischen drei Farben, beispielsweise Grün, Rot und Gelb, variieren oder auch nur zwischen zwei Farben oder auch zwischen zwei oder mehreren dieser und/oder anderer Farben, wenn das Display unter dem Statusfenster entsprechend farbig leuchtet.

So kann Grün für einen eingeschalteten, inaktiven Zustand, Gelb für einen eingeschalteten, aktiven Zustand, Rot für einen kritischen Zustand und keine Beleuchtung für einen ausgeschalteten Zustand stehen. Andere Codierungen sind selbstverständlich möglich. Alternativ kann der Zustand der Funktionstaste auch durch eine Farbgebung des Icons oder der Hintergrundfarbe des Icons erzeugt werden.

Vorzugsweise umgibt die opake Umgebung nicht nur den Durchsichtbereich einer Funktionstaste und, falls vorhanden, eines zugehörigen Statusfensters, sondern sie umgibt mehrere Durchsichtbereiche (und Statusfenster). Das heißt, mehrere Funktionstasten sind in einer opaken Fläche angeordnet.

Zusätzlich zu den Durchsichtbereichen der Funktionstasten und ggf. der zugehörigen Statusfenster können in der opaken Umgebung ein oder mehrere transparente oder zumindest transluzente Displayfenster vorgesehen sein, wobei die Steuerung bezüglich des Displayfensters eingerichtet ist, mittels des Displays in dem Displayfenster beliebige Informationen anzuzeigen. Das Display braucht im Bereich des Displayfensters nicht berührungsempfindlich zu sein, obwohl dies nicht ausgeschlossen ist.

Das resistive Touchdisplay kann als Anzeigeeinrichtung ein herkömmliches TFT-Display umfassen. Andere Anzeigeeinrichtungen können jedoch auch zum Einsatz kommen, beispielsweise ein Glas-Glas-Touchdisplay.

Über der Anzeigeeinrichtung des Touchdisplays ist der resistive Berührungssensor angeordnet, der beispielsweise nach herkömmlicher Art zwei übereinander angeordnete PET-Folien mit ITO-Beschichtung aufweisen kann. Die beiden PET-Folien sind geringfügig zueinander beabstandet und werden durch Betätigen der Funktionstasten aufeinandergedrückt, sodass die jeweiligen ITO-Beschichtungen miteinander in Kontakt kommen und ein entsprechendes Signal auslösen. Die Durchsichtbereiche der Funktionstasten sind ihrerseits vorzugsweise frei von elektrisch leitenden Strukturen. Die Druckempfindlichkeit von resistiven Touchdisplays kann über den Abstand zwischen den miteinander in Berührung zu bringenden Kontaktstellen eingestellt werden.

Die Betriebsarten des mittels der Bedienkonsole zu steuernden Geräts können sehr unterschiedlich sein. Beispielsweise bei einem fahrzeugmontierten Gerät, wie etwa an Baufahrzeugen oder Wasserwerferfahrzeugen, können die Betriebsarten auf einen Einrichtbetrieb, eine Transportfahrt, einen Arbeitsmodus etc. gerichtet sein.

Gemäß einer bevorzugten Ausgestaltung umfasst die Funktion einer oder mehrerer der Funktionstasten eine Sicherheitsfunktion. Beispielsweise kann die Sicherheitsfunktionstaste nur bei gleichzeitiger oder sequentieller Betätigung einer zweiten Taste aktivierbar ist. Insbesondere kann die zweite Taste eine andere Funktionstaste auf der Folie des Touchdisplays oder eine Standardtaste sein. Auch die zweite Taste ist vorzugsweise für den Nutzer taktil wahrnehmbar.

Bevorzugte Ausführungsformen der Erfindung sowie weitere vorteilhafte Ausgestaltungen werden anhand der begleitenden Zeichnungen näher erläutert. Es zeigen:
- Fig. 1: eine schematische Darstellung einer Bedienkonsole in Draufsicht;
- Fig. 2: einen Querschnitt der Bedienkonsole aus Fig. 1 entlang der Linie II-II;
- Fig. 3: die Bedienkonsole aus Fig. 1 in einem ersten Betriebsmodus; und
- Fig. 4: die Betriebskonsole aus Fig. 1 in einem zweiten Betriebsmodus.

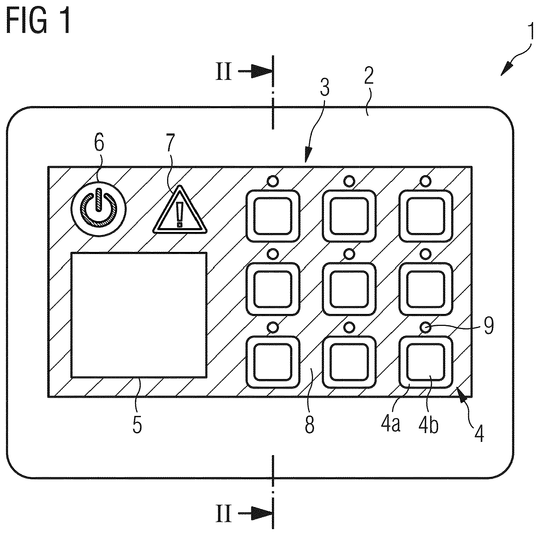

Fig. 1 zeigt eine Bedienkonsole 1 gemäß einem bevorzugten Ausführungsbeispiel schematisch in Aufsicht. Die Bedienkonsole 1 umfasst einen Rahmen 2, in welchem ein Display 3 aufgenommen ist. Das Display 3 mit einer Mehrzahl von Funktionstasten 4, einem Displayfenster 5 zur Anzeige beliebiger Informationen und weiteren, statischen Anzeigefeldern 6 und 7, die hier die Gestalt eines An-/Ausschalters und eines Warn-Icons haben. Im Bereich der Funktionstasten 4 und des Displayfensters 5 können mittels des Displays Informationen für den Nutzer angezeigt werden, wohingegen die Umgebung 8 dieser Bereiche 4, 5 sowie der Anzeigefelder 6 und 7 opak, vorzugsweise schwarz oder grau, bedruckt ist. Die Druckfarbe ist vorzugsweise matt, sodass sich das Displayfenster 5 und insbesondere die Funktionstasten 4 von der Umgebung 8 optisch abheben. In diesem bevorzugten Ausführungsbeispiel ist jeder Funktionstaste 4 (alternativ nur einer oder einzelnen) ein Statusfenster 9 zugeordnet, welches ebenfalls transparent oder zumindest transluzent ist. Die Statusfenster 9 sind hier kreisförmig, können aber jede beliebige Form annehmen. Sie dienen dazu, den aktuellen Status derjenigen Funktion, welche mittels des Displays 3 im Bereich der zugehörigen Funktionstaste 4 angezeigt wird, anzugeben, beispielsweise durch ein grünes oder rotes oder ggf. auch gelbes Licht, wobei auch andere Farben, wie etwa Blau, möglich sind. Grün kann etwa bedeuten, dass die im Bereich der betreffenden Funktionstaste 4 angezeigte Funktion eingeschaltet, aber inaktiv ist, während Rot bedeutet, dass die Funktion kritisch ist, wohingegen Gelb bedeuten kann, dass die Funktion eingeschaltet und auch aktiv ist.

Die Funktionstasten 4 umfassen somit jeweils einen transparenten Durchsichtbereich, der in Fig. 1 mit 4a gekennzeichnet ist. Innerhalb des Durchsichtbereichs 4a weist das Display bei jeder der Funktionstasten 4 eine nach oben, d.h. nach außen gerichtete Wölbung 4b auf, welche taktil wahrnehmbar ist und vom Benutzer nach unten bzw. hinten gedrückt werden kann, um so über das Display ein Signal zu erzeugen, welches in Bezug zu der betreffenden Funktion der Funktionstaste 4 steht, beispielsweise die betreffende Funktion ausschaltet oder einschaltet.

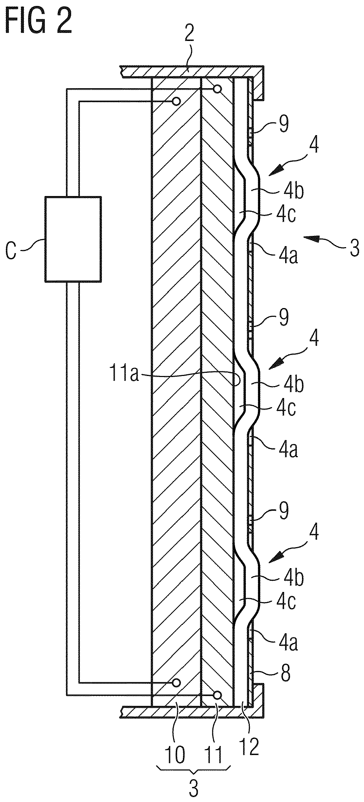

Bei dem Display 3 handelt es sich dementsprechend um ein Touchdisplay, konkret um ein resistives Touchdisplay, wie nachfolgend anhand des schematischen Querschnitts durch das Display 3 gemäß Fig. 2 erläutert wird. Das Display 3 besteht aus zwei in dem Rahmen 2 aufgenommenen Schichten 10 und 11. Bei der untersten Schicht 10 handelt es sich um die Anzeigeeinrichtung des resistiven Touchdisplays 3, welches beispielsweise ein TFT-Display ist. Dem Fachmann sind weitere Anzeigeeinrichtungen geläufig, die alternativ anstelle des TFT-Displays eingesetzt werden können. Darüber befindet sich ein Berührungssensor als Schicht 11. Bekannt sind im Wesentlichen kapazitive und resistive Berührungssensoren für Touchdisplays, wobei es sich bei der Berührungssensorschicht 11 um einen resistiven Berührungssensor handelt. Der Aufbau resistiver Berührungssensoren ist allgemein bekannt und umfasst im Wesentlichen zwei geringfügig voneinander beabstandete Schichten, beispielsweise PET-Folien, mit jeweils innenliegenden Leiterbahnstrukturen, die, wenn sie durch äußere Druckeinwirkung miteinander in Kontakt kommen, ein entsprechendes Signal erzeugen. Die Leiterbahnstrukturen sind so fein, dass sie den Blick auf die darunterliegende Anzeigeeinrichtung nicht stören. Sie können beispielsweise in einer ITO-Beschichtung ausgebildet sein. Die TFT-Displayschicht 10 und die Berührungssensorschicht 11 sind jeweils mit einer Steuerung C verbunden, die einerseits die Signale aus der Berührungsschicht 11 registriert und andererseits die mittels der TFT-Displayschicht 10 darzustellende Information erzeugt. Über der Berührungsschicht 11 liegt als die weitere Schicht 12 eine transparente Folie, in welcher die zuvor beschriebenen Funktionstasten 4 ausgebildet sind. Es handelt sich bei der Folie vorzugsweise um eine Polyesterfolie. Die Funktionstasten 4 umfassen einerseits jeweils einen Durchsichtbereich 4a und einen Wölbungsbereich 4b. Die opake Umgebung 8, welche die Durchsichtbereiche 4a begrenzt, wird durch einen opaken Aufdruck auf der Außenseite der transparenten Folie 12 gebildet. Alternativ kann dieser Aufdruck auch auf der innenliegenden Oberfläche der transparenten Folie 12 vorliegen. Anstatt die opake Umgebung 8 aufzudrucken, kann auch eine andere Beschichtungsweise gewählt werden. Im Bereich der den Funktionstasten 4 jeweils zugeordneten Statusfenster 9 ist die opake Umgebung 8 ebenfalls ausgespart, sodass durch das Statusfenster 9, die transparente Folie 12 und die Berührungssensorschicht 11 hindurch die TFT-Displayschicht 10 wahrnehmbar ist.

Die Wölbungsbereiche 4b der transparenten Folie 12 werden vorzugsweise geprägt und besonders bevorzugt im Heißprägeverfahren hergestellt. Alternativ kann auch eine Silikonmaterial verwendet werden, welches auf den Hohlraum verzichtet. Dieses Material kann in Kombination mit der Polyesterfolie oder als reine Silikonmatte eingesetzt werden. Es entsteht so unterhalb eines jeden Wölbungsbereichs 4b ein Hohlraum 4c. Ein Nutzer betätigt dementsprechend die Funktionstasten 4, indem er den Wölbungsbereich 4b gegen eine Berührungsoberfläche 11a der Berührungssensorschicht 11 drückt, um so die entsprechende Stelle in der Berührungssensorschicht 11 elektrisch kurzzuschließen und ein entsprechendes Signal zu erzeugen, welches von der Steuerung C verarbeitet wird. Aufgrund der Eigenelastizität der Folie 12 bewegt sich diese nach dem Schaltvorgang selbstständig zurück in die gewölbte Ausgangsstellung. Vorzugsweise beträgt die Dicke der Folie 12, zumindest im Wölbungsbereich 4b, zwischen 100 µm und 400 µm, z.B. 200 µm.

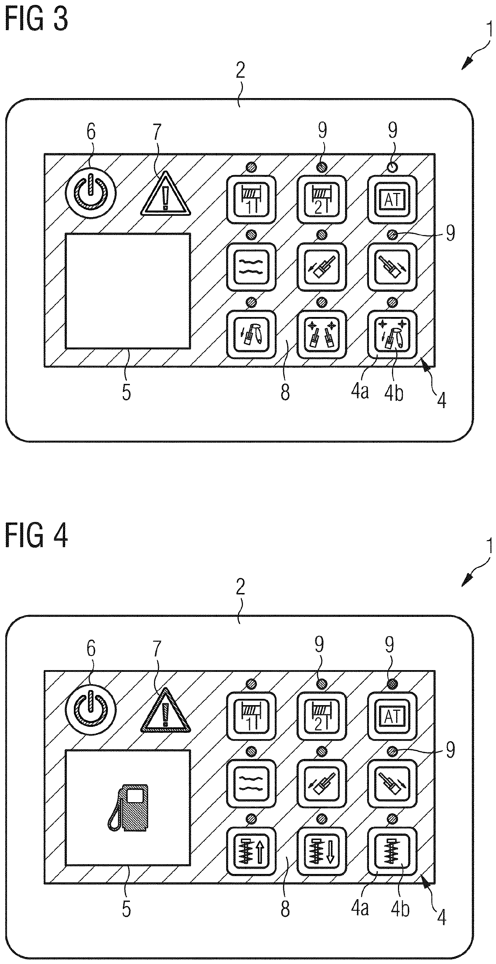

Während die Bedienkonsole in dem in Fig. 1 dargestellten Zustand ausgeschaltet ist und dementsprechend keinerlei Funktionen in den Durchsichtbereichen 4a anzeigt, zeigen die Figuren 3 und 4 die Bedienkonsole im eingeschalteten Zustand zur Bedienung eines Geräts, welches in unterschiedlichen Betriebsarten betrieben wird. Dabei sind die beiden oberen Funktionstastenreihen betriebsartunabhängig. Das heißt, die der betreffenden Funktionstaste 4 zugeordnete Funktion wird mittels des Displays durch den jeweiligen Durchsichtbereich 4a bei den beiden in Figuren 3 und 4 gezeigten Betriebsarten gleich angezeigt. Bei den drei Funktionstasten 4 in der unteren Funktionstastenreihe ist dies anders. Hier sind die Funktionstasten 4 von der jeweiligen Betriebsart des zu steuernden Geräts abhängig. Bei der Betriebsart gemäß Fig. 3 werden daher in den entsprechenden Durchsichtbereichen 4a andere Informationen mittels des darunterliegenden Displays angezeigt, nämlich in Form von Icons oder Symbolen, als bei der Betriebsart gemäß Fig. 4.

In den Statusfenstern 9 wird der jeweilige Status der Funktion angezeigt, welche der betreffenden Funktionstaste 4 zugehört. Eine rote Statusanzeige ist in den Figuren 3 und 4 beispielsweise schwarz wiedergegeben, eine grüne Statusanzeige grau und keine Statusanzeige weiß. Bezüglich der Statusfenster 9 hat sich zwischen den Figuren 3 und 4 lediglich die Statusanzeige des oberen rechten Statusfensters 9 geändert von Weiß (ohne Funktion in dieser Betriebsart) auf Gelb (aktiv und in Betrieb).

Außerdem leuchtet bei dem Ausführungsbeispiel gemäß Fig. 4 das Warn-Anzeigefeld 7 deutlich rot (dargestellt in Schwarz), und im Displayfenster 5 ist ein Zapfsäulensymbol dargestellt, welches dem Nutzer deutlich macht, dass das Warn-Anzeigefeld wegen eines niedrigen Kraftstofffüllstands aufleuchtet. Das Displayfenster 5 kann beliebige andere Informationen anzeigen. Es kann ebenfalls als Touchdisplay ausgebildet sein. Auch der Ein-/Ausschalter im Anzeigefeld 6 kann als Touchdisplay ausgebildet sein, so dass im eingeschalteten Zustand des Touchdisplays, bei dem also die Berührungsfunktion des Displayfensters unter Spannung steht, ein Berühren des Ein-/Ausschalters einen Wechsel des Geräts in einen Standby-Modus bewirken würde. In diesem Falle ist es zweckmäßig, die transparente Folie 12 auch in diesem Anzeigefeld 6 mit einem Wölbungsbereich 4b auszubilden. Insbesondere kann das Touchdisplay, anders als hier dargestellt, auch dazu eingerichtet sein, dass der Nutzer darüber zwischen verschiedenen Betriebsarten des damit zu steuernden Gerätes wechseln kann.

## Patentansprüche

1. Bedienkonsole (1) zum Bedienen eines Geräts, umfassend:
- ein als resistives Touchdisplay ausgebildetes Display (3) mit einer Berührungsoberfläche (11a),
- eine die Berührungsoberfläche (11a) bedeckende Folie (12), wobei die Folie (12) mindestens eine Funktionstaste (4) aufweist, die einerseits einen transparenten oder zumindest transluzenten Durchsichtbereich (4a) in einer demgegenüber opakeren Umgebung (8) umfasst, durch den hindurch das Display (3) visuell wahrnehmbar ist, und die andererseits einen sich in einer Richtung weg von der Berührungsoberfläche (11a) erstreckenden Wölbungsbereich (4b) umfasst, welcher taktil wahrnehmbar und vom Nutzer gegen die Berührungsoberfläche (11a) drückbar ist, und
- eine Steuerung (C), die dazu eingerichtet ist, dem Nutzer zu einer oder mehreren der mindestens einen Funktionstaste (4) mittels des Displays (3) durch den jeweiligen Durchsichtbereich (4a) hindurch eine Funktion der betreffenden Funktionstaste (4) anzuzeigen, die abhängig von einer individuellen Vorgabe variiert.

2. Bedienkonsole nach Anspruch 1, wobei das mittels der Bedienkonsole (1) zu bedienende Gerät in unterschiedlichen Betriebsarten betrieben werden kann, und wobei die individuelle Vorgabe, von der die in dem Durchsichtbereich (4a) der betreffenden Funktionstaste (4) angezeigte Funktion abhängt, die konkrete Betriebsart ist, in der das mittels der Bedienkonsole (1) zu bedienende Gerät betrieben wird oder betrieben werden soll.

3. Bedienkonsole nach Anspruch 2, wobei die Betriebsarten ein oder mehrere der folgenden Betriebsarten eines Geräts, insbesondere an einem Fahrzeug, beispielsweise Baufahrzeug oder Wasserwerferfahrzeug, umfassen: Einrichtbetrieb, Transportfahrt, Arbeitsmodus.

4. Bedienkonsole nach einem der Ansprüche 1 bis 3, wobei die Bedienkonsole (1) mit unterschiedlichen Menüarten betrieben werden kann, und wobei die individuelle Vorgabe, von der die in dem Durchsichtbereich (4a) der betreffenden Funktionstaste (4) angezeigte Funktion abhängt, die konkrete Menüart ist, mit dem die Bedienkonsole (1) betrieben wird.

5. Bedienkonsole nach einem der Ansprüche 1 bis 4, wobei der Wölbungsbereich (4b) in dem Durchsichtbereich (4a) ausgebildet ist.

6. Bedienkonsole nach einem der Ansprüche 1 bis 5, wobei ein Hohlraum (4c) unter dem Wölbungsbereich (4b) vorhanden ist.

7. Bedienkonsole nach Anspruch 6, wobei der Wölbungsbereich (4b) ein geprägter, insbesondere heißgeprägter, Bereich der Folie (12) ist.

8. Bedienkonsole nach Anspruch 6 oder 7, wobei die Folie (12) zumindest im Wölbungsbereich (4b) eine Dicke im Bereich von 100 µm bis 400 µm , bevorzugt etwa 200 µm, aufweist.

9. Bedienkonsole nach einem der Ansprüche 1 bis 8, wobei die Folie (12) eine Polyesterfolie oder Silikonfolie, vorzugsweise eine mattenartige Silikonfolie, ist.

10. Bedienkonsole nach einem der Ansprüche 1 bis 9, wobei die Funktion von einer oder mehreren der mindestens einen Funktionstaste (4) von der individuellen Vorgabe unabhängig ist und wobei die jeweilige Funktion der betreffenden Funktionstaste (4) mittels des Displays (3) durch den Durchsichtbereich (4a) hindurch unabhängig von der individuellen Vorgabe immer gleich angezeigt wird.

11. Bedienkonsole nach einem der Ansprüche 1 bis 10, wobei neben dem Durchsichtbereich (4a) ein transparentes oder zumindest transluzentes Statusfenster (9) in der opaken Umgebung (8) vorgesehen ist und wobei die Steuerung (C) eingerichtet ist, mittels des Displays (3) in dem Statusfenster (9) einen Farbcode anzuzeigen, der je nach Status variiert.

12. Bedienkonsole nach Anspruch 11, wobei der Farbcode zwischen zwei oder drei Farben variieren kann.

13. Bedienkonsole nach einem der Ansprüche 1 bis 12, wobei die opake Umgebung (8) durch eine opake Beschichtung auf der Oberseite oder vorzugsweise auf der Unterseite der Folie (12) gebildet wird.

14. Bedienkonsole nach einem der Ansprüche 1 bis 13, wobei die opake Umgebung (8) Durchsichtbereiche (4a) von mehreren der mindestens einer Funktionstaste (4) und, falls vorhanden, zugehörige Statusfenster (9) umgibt.

15. Bedienkonsole nach einem der Ansprüche 1 bis 14, wobei die opake Umgebung (8) zusätzlich zu dem Durchsichtbereich (4a) der mindestens einen Funktionstaste (4) ein transparentes oder zumindest transluzentes Displayfenster (5) umgibt, und wobei die Steuerung (C) eingerichtet ist, mittels des Displays (3) in dem Displayfenster (5) beliebige Informationen anzuzeigen.

16. Bedienkonsole nach einem der Ansprüche 1 bis 15, wobei das Display (3) als Anzeigeeinrichtung ein TFT-Display umfasst.

17. Bedienkonsole nach einem der Ansprüche 1 bis 16, wobei das Display (3) als Berührungssensor zwei übereinander angeordnete PET-Folien (10, 11) mit ITO-Beschichtung aufweist oder als resistives Glas-Glas-Touchdisplay ausgebildet ist.

18. Bedienkonsole nach einem der Ansprüche 1 bis 17, wobei die Folie (12) im Durchsichtbereich (4a) der Funktionstaste (4) frei von elektrisch leitenden Strukturen ist.

19. Bedienkonsole nach einem der Ansprüche 1 bis 18, wobei die Funktion der Funktionstaste eine Sicherheitsfunktion umfasst, indem die Funktionstaste nur bei gleichzeitiger oder sequentieller Betätigung einer zweiten Taste aktivierbar ist.

20. Bedienkonsole nach Anspruch 19, wobei die zweite Taste eine andere Funktionstaste der Folie oder eine Standardtaste ist.
